# EUROPEAN PATENT APPLICATION

(11) **EP 4 261 678 A1**
(43) Date of publication of application: **18.10.2023**
(21) Application number: 22168326.1
(22) Date of filing: 14.04.2022
(51) Int. Cl.: G06F 8/73

(54) **GENERATION OF A TECHNICAL INSTRUCTION**

(71) Applicant: Siemens Aktiengesellschaft, 80333 München (DE)
(72) Inventor: Böhm, Birthe, 90480 Nürnberg (DE); Stahnke, Susanne, 81549 München (DE)
(74) Representative: Siemens Patent Attorneys

(57) **Abstract**

The invention provides an apparatus (100) for generating a technical instruction (TI) for using a technical system (TS), comprising:
- an input unit (101) configured
- to read in a data structure for the technical instruction,
and
- to read in a system-specific dataset assigned to the technical system, wherein the system-specific dataset comprises operating information about an access interface of the technical system and/or about a data input interface of the technical system and required input data for reading in via said data input interface,

- an analysis unit (102) configured to extract the operating information from the system-specific dataset,
- a instruction generator (103) configured to generate the technical instruction depending on the extracted operating information, wherein the operating information is stored in the data structure for the technical instruction,
and
- an output unit (104) configured to output the technical instruction for usage of the technical system.

## Description

The present invention relates to an apparatus and a computer-implemented method for generating a technical instruction for use of a technical system, as well as a computer program product.

When a product or system is developed, serviced, or operated, a technical documentation or technical instruction of the product or system is usually provided to a user or a software interacting with the technical system. The creation of such technical description, e.g., a user manual, can be time consuming and/or expensive. Usually, a technical manual is based on selected information about the technical system and is done by a technical editor who is often not involved in the development or the operation of the technical system. The quality of the documentation depends on the understanding of the technical editor of the system and how he/she gets involved in the system development. If the system or its features are changed, e.g., in a next product version or due to the implementation of new features, the documentation needs to be adapted manually since there is usually no formal relationship between for example software development artifacts and the system documentation. Therefore, technical documentation can be not up-to-date and may get useless. Then, the reputation of the product and the products' company may be harmed.

It is therefore an objective of the present invention to enable efficient generation of technical documentation/instruction for use, development, and/or maintenance of a technical system or a product.

The object is solved by the features of the independent claims. The dependent claims contain further developments of the invention.

The invention provides according to the first aspect an apparatus for generating a technical instruction for use of a technical system, comprising:
- an input unit configured
- to read in a data structure for the technical instruction,
   and
   - to read in a system-specific dataset assigned to the technical system, wherein the system-specific dataset comprises operating information about an access interface of the technical system and/or about a data input interface of the technical system and required input data for reading in via said data input interface,
- an analysis unit configured to extract the operating information from the system-specific dataset,
- an instruction generator configured to generate the technical instruction depending on the extracted operating information, wherein the operating information is stored in the data structure for the technical instruction,
   and
- an output unit configured to output the technical instruction for use of the technical system via the access interface or the data input interface.

A technical system can for example be a software system, e.g., a software application or product. A technical system can also be a hardware system, e.g., a machine, a production machine, a device, or an industrial plant, as well as a system comprising software and hardware components. A technical system can also be a product, e.g., a software product. Furthermore, the technical system can also be a multi-discipline system for end users or used in industry such as measuring devices.

A technical instruction can comprise instructions and/or requirements for a user and/or an application software for using and/or interacting with the technical system. The technical instruction can for example be a user manual or a technical documentation, e.g., for operating or installing a software product. Alternatively, the technical instruction can be understood to comprise computer instructions for a computer for using the technical system. In that case, the technical instruction may comprise program commands.

A system-specific dataset assigned to the technical system can be understood as a dataset that comprises data or information that is specific for or characterizing the technical system. The system-specific data set comprises operating information. Operating information can comprise interaction information for interacting or accessing the technical system, information required for technical instruction and/or usage information for use of the technical system.

It is an advantage of the proposed invention that a generation of technical instructions, e.g., a user manual or technical documentation, can be automated. Therefore, the effort of manual documentation writing is reduced. Furthermore, the quality of the generated technical instruction is enhanced. The proposed invention bridges the information gap between development and operation of a technical system or product, as for example software development artifacts and/or data can be used for generation of the technical instruction. Thus, e.g., for software systems, the generation of the technical instruction can be integrated in a DevOps pipeline for the technical system or product. Also, existing knowledge about a technical system, e.g., a use case or user story, can be reused for generating the technical instruction.

According to a preferred embodiment, the system-specific dataset can comprise at least one of the following:
- a test case for testing the technical system,
- a system requirement according to a use case for using the technical system,
- a user story for developing the technical system,
   or
- a maintenance information for maintaining the technical system.

The system-specific dataset therefore preferably comprises relevant functional and/or non-functional requirements on the technical system or product. In software development for example, the test methodology requires the definition of test cases during the development phase of a product to ensure that relevant product features are tested properly. For example, user interactions with the product can be covered by a test case, as the user interaction provides access to the functionality of the product and therefore can be used as a basis for product usage, e.g., maintenance and service interactions, and other user interactions with the product.

According to an embodiment, the use can comprise operation, development and/or maintenance of the technical system.

In particular, a user or a software (application) can use the technical system. The use of the technical system may require access to and/or data exchange with the technical system, e.g., via an interface.

According to an embodiment, the input unit can be further configured to read in a system-specific dataset related to a system architecture, a computer-aided technical model and/or a technical drawing of the technical system, and the analysis unit can be further configured to extract the system architecture, the computer-aided technical model and/or the technical drawing, and the instruction generator can be configured to generate the technical instruction depending on the extracted system architecture, the computer-aided technical model and/or the technical drawing.

Therefore, further information about the technical system can be used for generating the technical instruction. Furthermore, this additional information can be used to enhance the technical instruction.

According to an embodiment, the apparatus further comprises a template generator that can be configured to generate a data structure for the technical instruction.

According to an embodiment, the template generator can be configured to generate a data structure depending on at least one predefined role of a recipient of the technical instruction.

There may be different user manuals or documentations, dependent on the system and/or its users or on user roles: For example, a technical instruction for a production machine may be documented from an operator's point of view, or for other users' tasks, e.g., for the maintenance engineer, or the automation engineer, as well as for a particular software.

According to an embodiment the template generator can be configured to generate the data structure depending on a system architecture.

The system architecture can have for example a hierarchical or modular structure. Therefore, the data structure of the technical instruction can for example be generated according to said system architecture.

According to an embodiment the instruction generator can be configured to generate the technical instruction by means of a natural language processing algorithm.

Therefore, the generated technical instruction can be generated in a user-friendly format and/or in another language or programming language.

According to an embodiment the analysis unit can be further configured to detect changes in the system-specific dataset and/or in the extracted operating information and to output a change information.

To this end, the analysis unit can for example compare a current with a former version of the system-specific dataset and/or the operation information.

According to an embodiment the instruction generator can be further configured to update the technical instruction depending on the change information or a change in the technical system.

The instruction generator preferably updates only a part of the technical instruction related to the change.

According to an embodiment the apparatus can further comprise a data retrieving unit, wherein the data retrieving unit can be configured to read in a variety of system-specific datasets and to select the system-specific dataset thereof depending on a predefined selection criterion.

For example, the datasets may be labelled according to their relevance for said technical system. Then a selection criterion may define that all datasets with a specific label shall be selected. It is also possible, that the selection is based on key words, component names of the technical system, and/or categories of the system-specific dataset, e.g., "test case".

According to an embodiment the apparatus can further comprise an operation unit configured to use the technical system according to the technical instruction.

Another aspect of the invention relates to a computer-implemented method for generating a technical instruction for using a technical system, the method comprising the steps:
- reading in a data structure for the technical instruction,
- reading in a system-specific dataset assigned to the technical system, wherein the system-specific dataset comprises operating information about an access interface of the technical system and/or about a data input interface of the technical system and required input data for reading in via the data input interface,

- extracting the operating information from the dataset for the technical instruction,
- generating the technical instruction depending on the extracted operating information, wherein the operating information is stored in the data structure,
   and
- outputting the technical instruction for operating the technical system via the access interface or the data input interface.

In addition, a computer program product (non-transitory computer readable storage medium having instructions, which when executed by a processor, performs actions) having program instructions for performing the aforementioned method according to embodiments of the invention is claimed.

The invention will be explained in more detail by reference to the accompanying figures.
- Fig. 1:: a first exemplary embodiment of an apparatus for generating a technical instruction for use of a technical system;
- Fig. 2:: a second exemplary embodiment of an apparatus for generating a technical instruction for use of a technical system;
- Fig. 3:: a third exemplary embodiment of an apparatus for generating a technical instruction for use of a technical system;
- Fig. 4: a first exemplary embodiment of a computer-implemented method for generating a technical instruction for using a technical system; and
- Fig. 5: a second exemplary embodiment of a computer-implemented method for generating a technical instruction for using a technical system.

Equivalent parts in the different figures are labeled with the same reference signs.

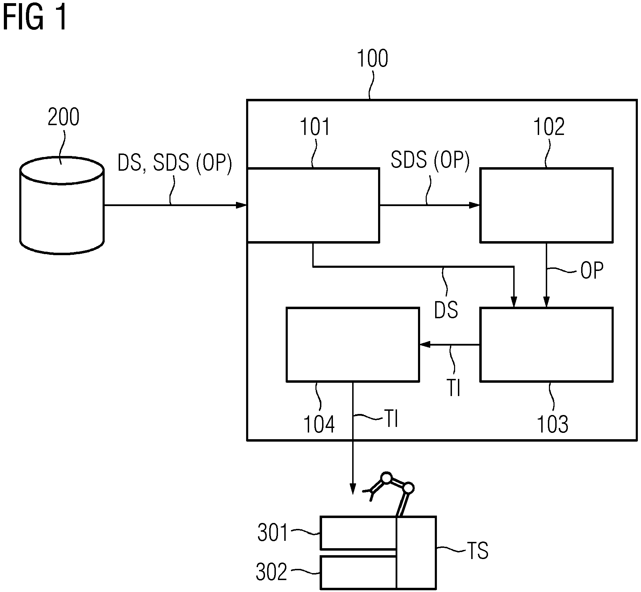

Figure 1 shows a first exemplary embodiment of an apparatus 100 for generating a technical instruction for use of a technical system. The technical system TS can for example be a machine, e.g., an industrial robot, comprising software and hardware components. The technical system TS can be accessed via an access interface 301. In addition, or alternatively, data can be input into the technical system TS via a data input interface 302. The technical system TS can be used by a user and/or by a software (application), wherein the user and/or the software access the technical system via the access interface 301 and/or transfer data via the data input interface 302. The user and/or the software can use and/or interact with the technical system, e.g., operate, develop, control, or maintain it. The access interface 301 can for example be a control unit, a physical access unit or a graphical-user-interface. The data input interface 302 can be for example a USB-port or a wireless data connection. The data input interface 302 can also be an API, a file transfer, an access to document management system.

The apparatus 100 may comprise at least one processor and is configured to generate a technical instruction TI for use of the technical system TS. For example, the technical instruction TI can be a user manual or a technical documentation for operating/using the technical system. The apparatus 100 comprises an input unit 101, an analysis unit 102, an instruction generator 103, and an output unit 104.

The input unit 101 is preferably connected to a storage unit 200, e.g., a cloud storage. The storage unit 200 can for example be part of the apparatus 100 or coupled to it. The input unit 101 is configured to read in/receive a data structure DS for the technical instruction, e.g., from the storage unit 200. The input unit 101 is further configured to read in/receive a system-specific dataset SDS, which is assigned to the technical system TS. The system-specific dataset SDS comprises operating information OP about the access interface 301 of the technical system TS and/or information about the data input interface 302 of the technical system TS as well as required input data for reading in via said data input interface 302.

The system-specific dataset SDS can be one of the following:
- a test case for testing the technical system,
- a system requirement according to a use case for using the technical system,
- a user story for developing the technical system,
   or
- a maintenance information for maintaining the technical system.

In agile software development, epics and user stories are defined as a basis for user-centric product development. Epics comprise multiple user stories. Both epics and user stories usually describe relevant user interactions with the product. They are usually used for defining product features and are the basis for implementation and testing of the product. Instead of using test cases as a basis for user manuals, it is also possible to use epics and user stories. Epics may also be used as "clusters" for user stories and, therefore, may already imply a user manual structure.

Since user documentations and user manuals usually also describe user interactions with the product, these test cases (or user stories / epics) can be used for generating user manuals and documentations. Furthermore, a documentation for the use of an Application Programming Interface (API) could be generated for developers based on test cases which are dedicated to the test of APIs.

Test cases may be described in different formats, depending on used test tools and their requirements. However, the description of test cases is usually done formally, e.g., by using scripting languages or adhering to a specific structure, and therefore, can be interpreted. In general, also test cases for manual testing are described in a structured way.

In addition, the input unit 101 can read in a system-specific dataset SDS related to a system architecture, a computer-aided technical model, a technical drawing and/or the system structure of the technical system. In particular, a technical drawing can be described in a structured way, e.g., as an XML-file or other code, that can be used for generating a technical instruction.

The analysis unit 102 is configured to extract the operating information OP from the system-specific dataset SDS. Furthermore, the analysis unit 102 can be configured to extract the system architecture, the computer-aided technical model and/or the technical drawing.

The data structure DS and the operating information OP is provided to the instruction generator 103. The instruction generator 103 is configured to generate the technical instruction TI depending on the extracted operating information OP, wherein the operating information OP is stored in the data structure DS for the technical instruction. Furthermore, the instruction generator can be configured to take the extracted system architecture, the computer-aided technical model and/or the technical drawing into account when generating the technical instructions TI. In particular, the technical instruction TI can be generated for a predefined role, e.g., a user's role, of a recipient of the technical instruction.

The output unit 104 is configured to output the technical instruction TI for use of the technical system TS via the access interface 301 or the data input interface 302. For example, the technical instruction can be provided to a user and/or to an operation unit and the technical system can be operated according to the technical instruction TI.

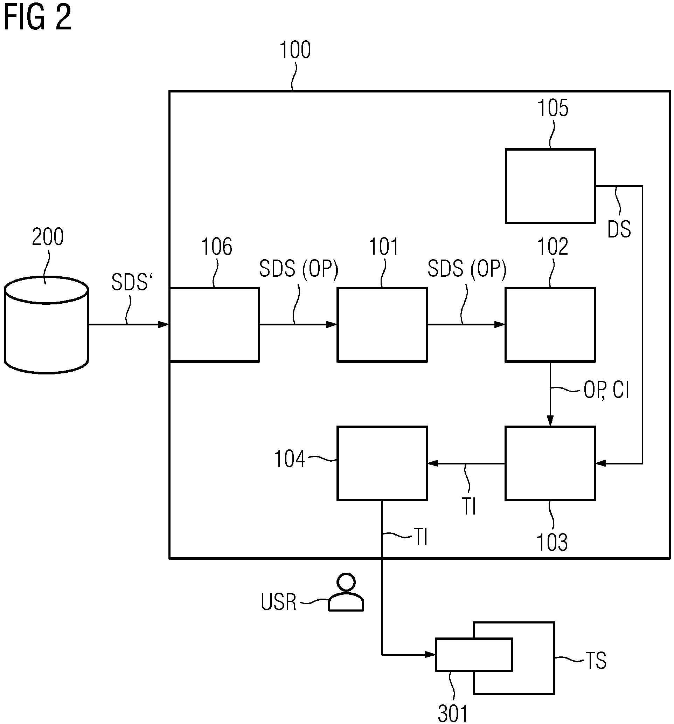

Figure 2 shows a second exemplary embodiment of an apparatus 100 for generating a technical instruction for use of a technical system TS.

The apparatus 100 comprises an input unit 101, an analysis unit 102, an instruction generator 103, and an output unit 104. Furthermore, the apparatus can comprise a template generator 105 and/or a data retrieving unit 106.

The data retrieving unit 106 is configured to retrieve a variety of system-specific datasets SDS' for example from a memory unit 200. The data retrieving unit 106 is configured to select the system-specific dataset SDS(OP) thereof depending on a predefined selection criterion. For example, the selection criterion can relate to requirements and/or characteristics of the technical system TS. For example, it is possible to select relevant system-specific dataset SDS based on components or component names of the technical system TS.

For example, for a software system TS, the data retrieving unit 106 crawls through the available software development artifacts, e.g., requirements, models, code, and selects the relevant information and provides access to it. For this purpose, it may use an existing structure to assign available information, e.g., the system architecture. For example, it could search for information on a system component called "Workflow Manager" in all available artifacts and link the retrieved information to the component "Workflow Manager" in the system architecture. In case a user wants to get information about the "Workflow Manager", he/she can follow the provided links.

The data retrieving unit 106 may also use knowledge graphs to connect information and for analysis, or the user may create a structure to sort the artifacts independent from user documentation.

The selected system-specific dataset SDS, comprising operation information OP for use of the technical system TS, is sent via the input unit 101 to the analysis unit 102. The analysis unit 102 extracts the operating information OP from the system-specific dataset SDS. This can be for example done using artificial intelligence, e.g., pattern or language recognition. It is also possible that the analysis unit 102 uses the full system-specific dataset and outputs it as operating information.

The analysis unit 102 is further configured to detect changes in the system-specific dataset SDS and/or in the extracted operating information OP and to output a change information CI. To this end, the apparatus may further comprise a memory to store at least a previous version of the system-specific dataset SDS and/or in the extracted operating information OP.

The operation information OP and preferably the change information CI are transmitted to the instruction generator 103. The instruction generator 103 generates a technical instruction TI depending on the extracted operating information OP and/or the change information CI. The operating information OP is stored in a data structure DS for the technical instruction TI. The instruction generator can also generate the technical instruction by means of a natural language processing algorithm.

The data structure DS for the technical instruction TI can be provided by the template generator 105. The template generator is configured to generate a data structure DS for the technical instructions. For example, the data structure can be generated based on at least one provided role of a recipient, e.g., a user USR, of the technical instruction TI for using the technical system TS. It is also possible that the template generator 105 can generate the data structure DS depending on a system architecture of the technical system TS. To this end, the system architecture and/or the role of the recipient can be provided as input to the template generator 105.

Furthermore, the template generator 105 may allow to define templates for technical instructions such as user documentations either by using a graphical user interface or an API. A structure for user documentations can be defined which can be instantiated for new user documentations and defines the chapters and its substructures for a user documentation. It is also possible to add text and other artifacts (e.g., pictures or diagrams) to these structures. Both the structure and the texts / artifacts may be either marked as unchangeable or may be adapted for specific user documentations. Layout settings may be also predefined as templates. In addition, text blocks can be written and stored for reuse for later documentations. The user can then create a new documentation project based on predefined templates. It is also possible to reload already defined templates and/or technical instructions, e.g., in case changes are required, wherein the template generator 105 is preferably connected to a memory storing the already defined templates and/or technical instructions.

The generated technical instructions are then output from the output unit 104 to an access interface 301 of the technical system. For example, a user USR can operate the technical system TS via the access interface 301 using the technical instructions TI.

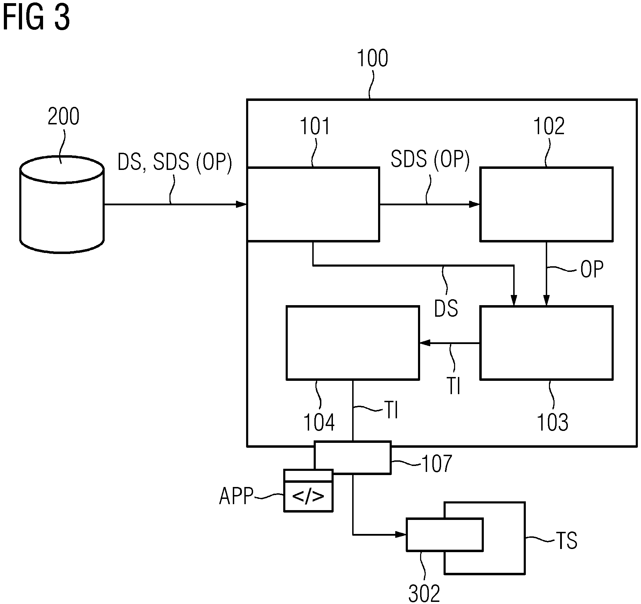

Figure 3 shows a third exemplary embodiment of an apparatus 100 for generating a technical instruction for using a technical system TS. The technical system TS can be for example a cyber-physical system comprising software and hardware components.

The technical system TS can be for example operated and/or maintained by a software program/computer program/software application APP. The apparatus 100 is configured to generate technical instructions TI for the software program APP to interact with the technical system TS, e.g., to exchange data via a data input interface 302 of the technical system TS.

The technical instructions TI for using the technical system TS are generated based on a system-specific dataset SDS comprises operating information OP about the data input interface 302 of the technical system TS and required input data for reading in via said data input interface 302. For example, the operating information OP can comprise a required data format and/or a required data type of the input data to be used with the data input interface 302.

The technical instructions TI are generated by the instruction generator 103 using the operation information and a provided data structure DS. The technical instructions TI are then sent by the output unit 104 to the operation unit 107. The operation unit 107 is configured to use the technical system. The software program APP can be coupled/can interact with the operation unit 107 to operate the technical system TS. For example, the software APP can send data to the interface 302 via the operating unit 107 to control or operate the technical system TS according to the technical instructions TI.

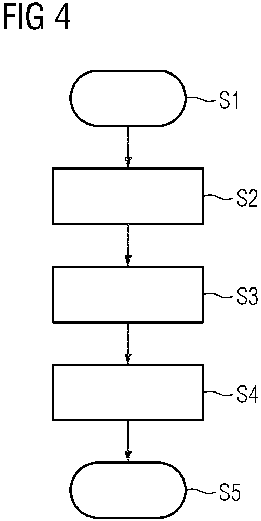

Figure 4 shows a first exemplary embodiment of a computer-implemented method for generating a technical instruction for using a technical system.

In a first step S1 a data structure is provided for the technical instruction. The data structure can be for example predefined according to a role of a recipient of the technical instructions. The data structure can also be aligned with a system architecture of the technical system.

In a next step S2 a system-specific dataset assigned to the technical system is provided. The system-specific dataset comprises operating information about an access interface of the technical system and/or about a data input interface of the technical system and required input data for reading in via the data input interface. In case of a software system, the system-specific dataset can be also referred to as a software development artifact. The system-specific dataset can be for example a test case for testing the technical system and, hence, comprising for example functional requirements for interacting with and/or accessing the technical system.

In a next step S3 the operating information is retrieved from the dataset for the technical instruction. An operating information can for example refer to a way to interact with the access interface of the technical system and/or a way to interact with a data input interface of the technical system and which input data for reading in via the data input interface is required.

In the next step S4 the technical instruction is generated using the extracted operating information. In particular, the operating information is stored in the data structure.

In the next step S5 the technical instruction for operating the technical system via the access interface or the data input interface is provided to for example a user. Then the technical system can be used according to the technical instruction.

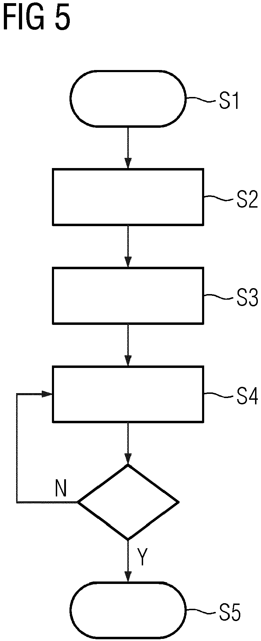

Figure 5 shows another exemplary embodiment of a computer-implemented method for generating a technical instruction for using a technical system. The technical instruction can for example be a user manual for using the technical system. The technical system can for example be a software product. The user manual may comprise for example instructions for installing or running the software product.

In a first step S1 a data structure is provided for the user manual. For example, the user creates a new user documentation or user manual project and provides basic information about the user documentation or manual. This information may be entered manually by the user or is generated automatically, e.g., based on general settings for generating the user manual. This basic information may include, e.g., title, product information (e.g., product version), date, company information, copyright information, and a basic document structure. In addition, or alternatively, templates for text blocks may be provided and either inserted automatically or manually by the user, e.g., for copyright information, contact, return address, or other general legal information.

In the next step S2 a system-specific dataset is received that is assigned to the software product. The system-specific dataset comprises operating information OP about an access interface of the software product and/or about a data input interface of the software product and required input data for reading in via the data input interface. For example, the system-specific dataset is a test case or a user story. For example, a list of test cases or user stories/epics can be retrieved by accessing a test suite used for this software product or any other test case descriptions or user stories available. From there, test cases or user stories are selected from this list that are relevant for this software product according to a selection criterion.

Furthermore, a list of available software development artifacts can be provided, such as the system architecture, circuit diagrams, activity diagrams or similar other diagrams, etc. These artifacts can be also added within the defined data structure and additional descriptions may be entered. For example, technical drawings may be used to explain the structure of the system for which the user documentation is written. The system architecture or another structure may be used to sort the available artifacts.

In the next step S3 operating information is extracted from the test cases. An operating information can for example be an interaction information with the software product.

In the next step S4 the technical instruction/user manual is generated depending on the extracted operating information, wherein the operating information is stored in the data structure. For example, the selected test cases can be assigned to the defined data structure within the current project. In addition, a user may provide additional text or may annotate, change, or delete text. For example, an introduction may be provided, abbreviations may be explained, pictures may be added or links to more detailed descriptions may be inserted. Furthermore, is the technical instruction can be generated by means of a natural language processing algorithm.

The generated user manual may then be checked for example by the recipient. Depending on the check result, the generated user manual can be output, branch Y, or updated/regenerated, branch N.

If the check result is positive, the technical system can then be used by the user according to the user manual; see step S5.

The user manual generation may be performed by an apparatus as exemplarily shown in Fig. 1-3.

The apparatus can for example comprise a template generator. It can provide a graphical user interface (and/or an Application Programming Interface (API)) that allows to define templates for user documentations, create projects for new user documentations and customize documentations.

The template generator may comprise the following two functions and components:
- a template configurator that may allow to define templates for user documentations either by using a graphical user interface or an API. A structure for user documentations can be defined which can be instantiated for new user documentations and defines the chapters and its substructures for a user documentation. It is also possible to add text and other artifacts (e.g., pictures or diagrams) to these structures. Both the structure and the texts / artifacts may be either marked as unchangeable or may be adapted for specific user documentations. Layout settings may be also predefined as templates. In addition, text blocks can be written and stored for reuse for later documentations.
- a documentation customizer: The user can create a new documentation project based on predefined templates or from scratch by using a graphical user interface (including an editor) or an API. This project can be stored and reloaded by the template generator. It is also possible to configure links to artifacts and import them: The user can customize the project according to the needs of the required user documentation. In particular, the user can use predefined text blocks and import artifacts from various tools, e.g., different test cases. Therefore, information about available functions or system architecture elements can be retrieved and attached to a list of functions or in a hierarchy representing, e.g., the system architecture.

The instruction generator can receive and store data structure templates and the user documentation projects in a persistent storage. Furthermore, it can import and analyse the artifacts, e.g., test case, for integration in user documentations/manuals.

The instruction generator can be coupled to the data retrieving unit that provides available artifacts for a specific user documentation. When the user works on a user documentation, he can provide links to available project artifacts, e.g., the directory in which the used test suite stores its test cases or the link to the system architecture project. Test cases (or user stories, use cases etc.) that are relevant for user documentation could be marked by the test case developers or the product manager/owner as input for the manual generation. Then, only relevant test cases are used.

One purpose of the data retrieving unit is to access the different artifacts (e.g., models, tool-specific projects), interpret the artifacts, and if necessary and possible, make them available for integration in the user documentation (e.g., as a picture or integrated in the text). This may be also done by exporting artifacts from other tools. The retrieving unit may check on changes of the artifacts - either regularly or on demand - and can reimport changed artifacts by creating a new version of the artifact. In addition, any changes made to the previous version of the artifact can be stored and reapplied to the new version of the artifact with a request for review by the user. The data retrieving unit can enable the integration of the artifacts in the user documentation. Therefore, they may just import the artifact as a picture or analyse the artifact and, e.g., generate pictures with descriptions. This depends on the format of the artifact or the tools which provide access to it.

The data retrieving unit can be further configured to provide access to the test cases that may be directly reused as user documentation. Usually, expected user interactions or interactions of external systems with the product or system are described by test cases to make sure that exactly these sequences are tested. These test cases may be directly used to explain essential interactions in the user documentation or user manual. If the format of the test case does not allow direct usage or interpretation in a human readable format, then at least the test case can be used as a first version for the technical editor. This first version may be enriched by the technical editor in the following. Dependent on the level of detail of the test case, the test case may be used directly in the user documentation and the technical editor just may describe the context.

The data retrieving unit can be configured to import (information about) the system architecture model, e.g., as a picture or graph representation, and provide the documentation of the system architecture as an editable and structured text in addition. This text may serve as a starting point for the technical editor to detail the user documentation. Moreover, the system architecture can be used as a hierarchy to sort the other available artifacts.

The data retrieving unit crawls through the available artifacts, selects the relevant information depending on a selection criterion and provides access to the information. For this purpose, it may use an existing structure to assign available information, e.g., the system architecture.

In case of changes to the product or system artifacts, the user manual may have to be updated. For example, a new product feature was developed and must be documented in the user documentation or manual. In this case, a check for updates may be triggered or performed on a regular basis. Then the data retrieving unit and/or the analysis unit may check whether any information in their artifacts was changed. If yes, the change information is provided to the instruction generator to update the technical instruction.

All of the described and/or drawn features as shown by the embodiments can be advantageously combined within the scope of the invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Apparatus (100) for generating a technical instruction for use of a technical system, comprising:
- an input unit (101) configured
- to read in a data structure (DS) for the technical instruction (TI),
and
- to read in a system-specific dataset (SDS) assigned to the technical system (TS), wherein the system-specific dataset (SDS) comprises operating information (OP) about an access interface (301) of the technical system (TS) and/or about a data input interface (302) of the technical system (TS) and required input data for reading in via said data input interface (302),
- an analysis unit (102) configured to extract the operating information (OP) from the system-specific dataset,
- an instruction generator (103) configured to generate the technical instruction (TI) depending on the extracted operating information (OP), wherein the operating information (OP) is stored in the data structure (DS) for the technical instruction (TI),
and
- an output unit (104) configured to output the technical instruction for use of the technical system via the access interface (301) or the data input interface (302).

2. Apparatus according to claim 1, wherein the system-specific dataset (SDS) comprises at least one of the following:
- a test case for testing the technical system,
- a system requirement according to a use case for using the technical system,
- a user story for developing the technical system,
or
- a maintenance information for maintaining the technical system.

3. Apparatus according to claim 1 or 2, wherein the use comprises operation, development and/or maintenance of the technical system.

4. Apparatus according to one of the preceding claims, wherein the input unit is further configured to read in a system-specific dataset related to a system architecture, a computer-aided technical model and/or a technical drawing of the technical system, wherein the analysis unit is further configured to extract the system architecture, the computer-aided technical model and/or the technical drawing, and wherein the instruction generator is configured to generate the technical instruction depending on the extracted system architecture, the computer-aided technical model and/or the technical drawing.

5. Apparatus according to one of the preceding claims further comprising a template generator (105) configured to generate a data structure (DS) for the technical instruction.

6. Apparatus according to claim 5, wherein the template generator (105) is configured to generate a data structure depending on at least one predefined role of a recipient (USR, CP) of the technical instruction.

7. Apparatus according to claims 5 or 6, wherein the template generator (105) is configured to generate the data structure depending on a system architecture.

8. Apparatus according to one of the preceding claims wherein the instruction generator (103) is configured to generate the technical instruction by means of a natural language processing algorithm.

9. Apparatus according to one of the preceding claims wherein the analysis unit (102) is further configured to detect changes in the system-specific dataset and/or in the extracted operating information and to output a change information (CI) .

10. Apparatus according to claim 9, wherein the instruction generator (103) is further configured to update the technical instruction depending on the change information (CI) or a change in the technical system.

11. Apparatus according to one of the preceding claims further comprising a data retrieving unit (106), wherein the data retrieving unit is configured to read in a variety of system-specific datasets and to select the system-specific dataset thereof depending on a predefined selection criterion.

12. Apparatus according to one of the preceding claims further comprising an operation unit (107) configured to use the technical system according to the technical instruction.

13. Computer-implemented method for generating a technical instruction for using a technical system, the method comprising the steps:
- reading in (S1) a data structure (DS) for the technical instruction (TI),
- reading in (S2) a system-specific dataset (SDS) assigned to the technical system (TS), wherein the system-specific dataset comprises operating information (OP) about an access interface (301) of the technical system and/or about a data input interface (302) of the technical system and required input data for reading in via the data input interface,
- extracting (S3) the operating information (OP) from the system-specific dataset (SDS) for the technical instruction (TI),
- generating (S4) the technical instruction (TI) depending on the extracted operating information (OP), wherein the operating information is stored in the data structure (DS),
and
- outputting (S5) the technical instruction (TI) for operating the technical system via the access interface (301) or the data input interface (302).

14. Computer program product directly loadable into the internal memory of a digital computer, comprising software code portions for performing the method steps of claim 13 when said computer program product is run on a computer.
